# EUROPÄISCHE PATENTSCHRIFT

(11) **EP 3 963 375 B1**
(45) Veröffentlichungstag und Bekanntmachung des Hinweises auf die Patenterteilung: **15.11.2023**
(21) Anmeldenummer: 20729628.6
(22) Anmeldetag: 30.04.2020
(51) Int. Cl.: G02B 5/32, H04N 23/50, H04N 23/54

(54) **KAMERAVORRICHTUNG ZUM ERZEUGEN EINES ABBILDS EINER UMGEBUNG**
CAMERA APPARATUS FOR GENERATING AN IMAGE OF SURROUNDINGS
SYSTÈME DE CAMÉRA DESTINÉ À GÉNÉRER UNE IMAGE D'UN ENVIRONNEMENT

(30) Priorität: 03.05.2019 DE 102019206354
(43) Veröffentlichungstag der Anmeldung: 09.03.2022
(73) Patentinhaber: Audi AG, 85045 Ingolstadt (DE)
(72) Erfinder: KLUG, Markus, 85057 Ingolstadt (DE)
(74) Vertreter: Hofstetter, Schurack & Partner
(86) Internationale Anmeldenummer: PCT/EP2020/062109
(87) Internationale Veröffentlichungsnummer: WO 2020/225121

(56) Entgegenhaltungen:
- DE-A1-102017 217 193
- US-A- 5 856 842
- US-A- 6 118 589

## Beschreibung

Die Erfindung betrifft eine Kameravorrichtung zum Erzeugen eines Abbilds einer Umgebung. Eine Kameravorrichtung im Sinne der Erfindung ist eine Vorrichtung zum Aufzeichnen statischer oder bewegter Bilder, welche ein Abbild einer Umgebung der Kameravorrichtung darstellen. Das besagte Abbild kann in Form von digitalen Bilddaten ausgegeben werden.

Eine Kameravorrichtung kann beispielsweise als Fotokamera oder Videokamera zum Beispiel als Spiegelreflexkamera, Digitalkamera oder Smartphone (mobiles Endgerät) ausgebildet sein. Diese sind meist eher sperrig und weisen dadurch einen erhöhten Platzbedarf auf. Dadurch ist eine derartige Kameravorrichtung meist umständlich zu transportieren.

Mit der Miniaturisierung von optischen Systemen, wie zum Beispiel Kameravorrichtungen, ist es heutzutage auch möglich, flexible Kameravorrichtungen bereitzustellen. Zum Beispiel ist aus der US 2018/0205929 A1 ein Mehrfachkamerasystem bekannt, bei welchem eine Vielzahl an Einzelkameras auf einer Oberfläche angeordnet sind. Durch Biegen der Oberfläche kann durch das Mehrfachkamerasystem eine dreidimensionale Aufnahme der Umgebung des Kamerasystems erstellen werden.

Weiterhin ist aus der wissenschaftlichen Veröffentlichung "Holoflex: A flexible light field smartphone with a micro lens array and a P-OLED Touch Screen" (2016; Gotsch D; Zhang X.; Carrascal J.P.; Vertegal R.; Human Media Lab; Queen's University;) ein flexibles Smartphone zur Aufnahme von Bildern, die dann mittels einer Mikrolinsenanordnung dreidimensional dargestellt werden können. Die Aufnahme kann dabei über eine Anordnung an dreidimensionalen Tiefenkameras oder einem Array an Fotodetektoren, beispielsweise organischen Fotodetektoren, erfolgen.

Außerdem ist aus der wissenschaftlichen Veröffentlichung "Towards flexible sheet cameras: Deformable lens array with intrinsic optical adaption" (Sims, D.C.; Yue, Y.; Nayar, S.K.; Department of Computer Science, Columia University) eine flexible Linsenanordnung beziehungsweise ein flexibles Linsenarray aus Silikongummi bekannt, das mit einem zweidimensionalen Array von Detektoren gekoppelt ist.

Nachteil des genannten Stands der Technik ist es, dass zur Bilderfassung eine Vielzahl an Einzelkomponenten, also einzelnen Kameras, verwendet wird. Häufig ist die Herstellung derartiger Bilderfassungssysteme dadurch aufwendig und die Systeme sind aufgrund der Vielzahl an Einzelkomponenten meist anfällig für Ausfälle. Zudem ist es technisch aufwendig und bedarf einer erhöhten Rechenleistung, um die erfassten Bilder der vielen Einzelkameras zu einem gemeinsamen Bild zusammenzuführen.

Eine weitere Herangehensweise zum Bereitstellen einer flexiblen Kamera ist aus der US 6,118,589 bekannt. Hier ist eine sägezahnartige Anordnung von zwei Prismensätzen offenbart. Diese können im aneinander anliegenden Zustand in Zylinderform gerollt werden. Dadurch können insbesondere Rundumsichtbilder oder Panoramabilder aufgenommen und angezeigt werden. Derartige Prismensätze zu schleifen ist jedoch aufwendig, sodass die Herstellung der flexiblen Kamera mit den zwei Prismensätzen zeit- und kostenintensiv ist.

Aus der US 5,856,842 A ist eine Vorrichtung zum Aufnehmen eines Bildes einer Person bekannt. Der Aufnahmebereich der Vorrichtung umfasst ein transparentes Element mit einem holographischen Gitter und ist mit einem Bildsensor gekoppelt. Über den Aufnahmebereich wird an der Person reflektiertes Licht an den Bildsensor umgelenkt.

Aus der US 6,118,589 A ist eine Vorrichtung zum Scannen von Dokumenten bekannt. Eine Scanfläche wird aus zwei verzahnt ineinandergreifenden Prismensätzen gebildet, von denen einer elektro-optische Eigenschaften aufweist und dadurch der Reflexionsgrad der einzelnen Prismen des Prismensatzes anpassbar ist. Durch die verzahnte Anordnung der Prismensätze ist die Scanfläche verformbar ausgebildet. DE 10 2017 217193 A1, betrifft ein Anzeigevorrichtung, insbesondere für ein Fahrzeug, mit wenigstens einer Scheibe, mit wenigstens einem zumindest innerhalb eines transparenten Teilbereichs der Scheibe angeordneten Volumenhologramm, und mit wenigstens einer Lichtquelle, mittels welcher in das Volumenhologramm Licht einkoppelbar ist, aus welchem mittels des Volumenhologramms wenigstens ein für einen menschlichen Betrachter räumlich erscheinendes Bild erzeugbar ist, wobei wenigstens eine zumindest einen lichtempfindlichen Bildsensor aufweisende Kameravorrichtung, deren Optik, über welche mittels des Bildsensors Bilder erfassbar sind, zumindest teilweise durch den Teilbereich gebildet ist.

Es ist die Aufgabe der vorliegenden Erfindung, eine Kameravorrichtung bereitzustellen, welche kompakt zu transportieren ist.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren offenbart.

Durch die Erfindung ist eine Kameravorrichtung zum Erzeugen eines Abbilds einer Umgebung bereitgestellt. Das Abbild kann zum Beispiel in Form von Bilddaten bereitgestellt werden. Die Kameravorrichtung umfasst dazu ein Trägermedium, welche beispielsweise als Platte aus Kunststoff realisiert ist, und eine Bilderfassungseinrichtung, wobei das Trägermedium Licht aus der Umgebung an die Bilderfassungseinrichtung weiterleitet. Das Trägermedium ist somit als Lichtleiter ausgebildet, d.h. es ist ein Lichtleitermedium. Das heißt, das Trägermedium kann Licht, welches in das Trägermedium eingekoppelt ist, mittels interner Reflexion, bevorzugt Totalreflexion, an die Bilderfassungseinrichtung weiterleiten. Die Bilderfassungseinrichtung kann das weitergeleitete Licht, welches insbesondere aus dem Trägermedium ausgekoppelt ist, erfassen und daraus Bilddaten erzeugen oder generieren. Bevorzugt kann die Bilderfassungseinrichtung als Bildsensor oder Kamera, jeweils mit oder ohne abbildende Optik, wie zum Beispiel einer Linse oder einem Linsensystem, realisiert sein.

Zum Einkoppeln oder Auskoppeln des Lichts sind an dem Trägermedium ein Einkoppelbereich und ein Auskoppelbereich angeordnet, d.h. das Trägermedium trägt den Einkoppelbereich und den Auskoppelbereich . Dabei weist der Einkoppelbereich eine erste Ablenkstruktur auf, welche zum Beispiel als Beugungsgitter realisiert sein kann. Ferner weist der Auskoppelbereich eine zweite Ablenkstruktur auf, welche ebenfalls als Beugungsgitter realisiert sein kann. Somit kann das Licht aus der Umgebung an der ersten Ablenkstruktur des Einkoppelbereichs abgelenkt oder gebeugt und in das Trägermedium eingekoppelt werden. Entsprechend kann das von dem Trägermedium übertragene Licht an der zweiten Ablenkstruktur abgelenkt oder gebeugt und aus dem Trägermedium ausgekoppelt werden.

Mit anderen Worten weist der Einkoppelbereich eine erste Ablenkstruktur auf, die dazu ausgebildet ist, Licht, das aus der Umgebung auf die erste Ablenkstruktur fällt, in das Trägermedium einzukoppeln. Das Trägermedium ist ausgebildet, das eingekoppelte Licht mittels interner Reflexion von dem Einkoppelbereich an den Auskoppelbereich zu übertragen. Schließlich weist der Auskoppelbereich eine zweite Ablenkstruktur, auf, die dazu ausgebildet ist, das übertragene Licht, das auf die zweite Ablenkstruktur fällt, aus dem Trägermedium auszukoppeln.

Zum Erfassen des aus dem Trägermedium ausgekoppelten Lichts, liegt die Bilderfassungseinrichtung an dem Auskoppelbereich an. Wie zuvor beschrieben, ist die Bilderfassungseinrichtung ausgebildet, das aus dem Trägermedium ausgekoppelte Licht zu erfassen und in Form von Bilddaten bereitzustellen. Die Bilddaten sind dabei mit dem einfallenden Licht der Umgebung korreliert.

Um den kompakten Transport der Kameravorrichtung zu ermöglichen, ist das Trägermedium zumindest im Bereich des Einkoppelbereichs zumindest bereichsweise flexibel ausgebildet. Anders ausgedrückt, kann das Trägermedium im Bereich des Einkoppelbereichs ganz oder abschnittsweise flexibel oder biegbar ausgebildet sein. Bevorzugt kann der gesamte Einkoppelbereich, insbesondere das gesamte Trägermedium flexibel ausgebildet sein und dadurch flexibel verformbar sein. Das Trägermedium kann also zumindest einen flexiblen Abschnitt aufweisen. Somit kann eine flexible Kameravorrichtung bereitgestellt werden.

Hierdurch ergibt sich der Vorteil, dass die Kameravorrichtung zum Transportieren einfach zusammengefaltet oder zusammengerollt werden kann. Im zusammengefalteten oder zusammengerollten Zustand weist die Kameravorrichtung dann einen geringeren Platzbedarf auf als in einem auseinandergefalteten oder auseinandergerollten Zustand. Im Folgenden werden als Synonyme für zusammengefaltet oder zusammengerollt die Begriffe gefaltet oder eingerollt verwendet. Entsprechend werden als Synonyme für auseinandergefaltet oder auseinandergerollt die Begriffe entfaltet oder entrollt verwendet.

Zum Transportieren kann die Kameravorrichtung somit im eingerollten oder gefalteten Zustand beispielsweise in einer Hosentasche eines Nutzers verstaut werden. Durch ihre Flexibilität ist die Kameravorrichtung zudem nachgiebiger bei Druck- und Zugbelastungen oder Schlägen, und somit in vorteilhafter Weise geschützter als eine unflexible oder starre Variante. Der Nutzer kann sich dadurch beispielweise mit der gefalteten Kameravorrichtung in der Hosentasche hinsetzen, ohne dass die Kameravorrichtung beschädigt wird. Zum Erfassen oder Erzeugen eines Abbilds oder Bilds der Umgebung kann die Kameravorrichtung dann entfaltet oder entrollt und dadurch in eine planare oder flächige Form gebracht werden. Der zuvor genannte entrollte oder entfaltete Zustand kann somit auch als planarer oder flächiger Zustand bezeichnet werden.

Dadurch, dass nur eine einzelne Bilderfassungseinrichtung, zum Beispiel eine einzelne Kamera, zum Erfassen des Bilds nötig ist, kann wird zudem weniger Rechenleistung benötigt und der Fertigungsaufwand zum Herstellen der Kameravorrichtung ist geringer als im eingangs beschrieben Stand der Technik.

Das Trägermedium kann in vorteilhafter Weise formstabil ausgebildet sein. Zum Beispiel kann das Trägermedium in einem Ruhezustand, also in einem unverformten Zustand, in der beschriebenen Weise als Platte oder als planares flächiges Element, ausgebildet sein. Aus dem Ruhezustand heraus kann das Trägermedium jedoch mittels Kraftaufwand oder Krafteinwirkung in der beschriebenen Weise flexibel verformt, also beispielsweise gefaltet oder eingerollt, werden. Insbesondere kann das Trägermedium auch elastisch ausgebildet sein, sodass es sich beispielsweise aus dem eingerollten oder gefalteten Zustand selbsttätig bei Wegfall der Krafteinwirkung in den Ruhezustand zurückverformt, also sich selbstständig entfaltet oder entrollt. Alternativ kann das Trägermedium auch plastisch ausgebildet sein. Das heißt, es kann auf ein Verformen hin im dem verformten Zustand verweilen.

In einer anderen Ausgestaltung kann das Trägermedium im Ruhezustand statt formstabil beispielsweise biegeschlaff oder forminstabil ausgebildet sein. Das Trägermedium kann somit zum Beispiel erst durch erst durch Spannen in den beschriebenen planaren Zustand gebracht werden und dadurch das planares und flächiges Element darstellen.

Zum Befestigen der Bilderfassungseinrichtung an dem Trägermedium kann die Bilderfassungseinrichtung beispielsweise an das Trägermedium angeklebt oder auf das Trägermedium aufgesteckt werden. Alternativ kann auch das Trägermedium in eine Halteeinrichtung der Bilderfassungseinrichtung eingespannt werden. Die Bilderfassungseinrichtung kann insbesonder als Bildsensor, beispielsweise als CCD-Sensor (Charged Coupled Device - ladungsgekoppelte Vorrichtung) oder als CMOS-Sensor (Complementary Metal Oxide Semiconductor - komplementärer Metalloxid-Halbleiter), ausgebildet sein. Bei dieser Ausgestaltung der Bilderfassungseinrichtung als Bildsensor kann das Trägermedium, an welchem der Einkoppelbereich und der Auskoppelbereich angeordnet sind, zusätzlich die Aufgabe eines Objektivs, also einer abbildenden Optik, übernehmen. Alternativ kann die Bilderfassungseinrichtung auch als Kamera oder Fotoapparat, insbesondere als Mikrokamera, wie sie beispielsweise in einem Smartphone ausgebildet ist, mit eigener abbildender Optik realisiert sein.

Die Erfindung sieht zudem vor, dass die Kameravorrichtung eine Verstaueinrichtung umfasst, an welcher das Trägermedium angeordnet ist und die ausgebildet ist, zumindest einen flexiblen Abschnitt des Trägermediums zu verformen. Die Verstaueinrichtung kann beispielsweise als pneumatisch oder hydraulisch betriebene Verstellmechanik oder als temperaturabhängig verformendes Formgedächtnisstruktur ausgebildet sein. Bevorzugt kann die Verstaueinrichtung dazu eingerichtet sein, den zumindest einen flexiblen Abschnitt des Trägermediums in Abhängigkeit von einem Steuersignal zu verformen.

Die Verstaueinrichtung ist somit ausgelegt, das Trägermedium zwischen einer Kompaktstellung oder Kompaktstellung, in welcher das Trägermedium zusammengefaltet oder zusammengerollt ist, und in einer Betriebsstellung, in welcher das Trägermedium auseinandergefaltet oder auseinandergerollt ist, zu wechseln. Anders ausgedrückt, kann die Verstaueinrichtung das Trägermedium entweder in der Kompaktstellung oder der Betriebsstellung positionieren. Somit kann die Verstaueinrichtung zwischen dem gefalteten oder eingerollten Zustand und dem planaren Zustand des Trägermediums oder der Kameravorrichtung umschalten. Dadurch, dass das Trägermedium kann mittels der Verstaueinrichtung in der Betriebsstellung planar beziehungsweise flächig angeordnet werden kann, kann die Betriebsstellung kann somit den planaren Zustand des Trägermediums beschreiben. Hingegen kann das Trägermedium durch die Verstaueinrichtung in der Kompaktstellung uneben oder ungleichmäßig angeordnet werden, wodurch die Kompaktstellung somit den eingerollten oder gefalteten Zustand des Trägermediums beschreiben kann.

Somit weist das Trägermedium in der Betriebsstellung eine größere Lichteinfallfläche für das Licht, das aus der Umgebung auf den Einkoppelbereich fällt, auf, als in der Kompaktstellung. Mit Lichteinfallsfläche ist eine effektive oder absolute Fläche des Trägermediums, insbesondere des Einkoppelbereichs gemeint, die von dem Licht aus der Umgebung beleuchtet oder angestrahlt ist. Im Hinblick auf den Einkoppelbereich kann somit in der Betriebsstellung die Lichteinfallfläche maximiert werden. Mit anderen Worten kann eine absolute Außenabmessung der Kameravorrichtung mittels der Verstaueinrichtung verändert werden. Die absolute Außenabmessung in der Kompaktstellung ist insbesondere kleiner als die absolute Außenabmessung in der Betriebsstellung. Somit kann vorzugsweise nur in dem Betriebszustand ein gewünschter Sichtbereich in der Umgebung mittels der Kameravorrichtung korrekt, also zum Beispiel scharf und unverzerrt, abgebildet oder dargestellt werden. Jedoch kann in vorteilhafter Weise auch vorgesehen sein, dass auch in der Kompaktstellung zumindest ein Teilbereich der Umgebung, das heißt ein Ausschnitt des gewünschten Sichtbereichs mittels der Kameravorrichtung korrekt, also zum Beispiel scharf und unverzerrt, abgebildet oder dargestellt werden kann.

Hierdurch ergibt sich der Vorteil, dass sich die Kameravorrichtung je nach Anwendungsfall durch die Verstaueinrichtung automatisch oder selbstständig in der Betriebsstellung oder der Kompaktstellung positionieren kann.

Zu der Erfindung gehören auch Ausführungsformen, durch die sich zusätzliche Vorteile ergeben.

Eine Ausführungsform sieht vor, dass die Steuereinrichtung eine Stützstruktur umfasst, die ein Material aufweist, das ausgebildet ist, den flexiblen Abschnitt des Trägermediums bei einem ersten Wert einer Temperatur und/oder eines elektrischen Felds und/oder eines magnetischen Felds in der Betriebsstellung und bei einem zweiten Wert in der Kompaktstellung zu arretieren.

Anders ausgedrückt, kann die Stützstruktur ausgebildet sein, sich in Abhängigkeit von einer Temperatur und/oder einem elektrischen und/oder magnetischen Feld zu verformen und dadurch auch die Verformung des Trägermediums, insbesondere des flexiblen Abschnitts des Trägermediums, herbeizuführen. Somit kann durch Einstellen der Temperatur, des elektrischen Feldes und/oder des magnetischen Felds das Trägermedium in der Betriebsstellung oder in der Kompaktstellung arretiert beziehungsweise gehalten werden.

Die Stützstruktur kann als Material beispielsweise ein Bimetall, eine Formgedächtnislegierung, ein Formgedächtnispolymer oder ein elektrochemisches oder piezoelektrisches Material oder magnetische Nanopartikel umfassen.

Zusätzlich kann die Verstaueinrichtung auch eine Ansteuereinrichtung für die Stützstruktur umfassen, mittels welcher der entsprechende Temperaturwert und/oder der jeweilige Wert des elektrischen beziehungsweise magnetischen Felds eingestellt werden kann, sodass die Stützstruktur sich verformt. Beispielsweise kann ein Heizdraht und/oder ein Elektromagneten und/oder ein Kondensator vorgesehen sein, die mittels eines Steuersignals von einem Mikrocontroller angesteuert werden.

Eine weitere Ausführungsform sieht vor, dass die Verstaueinrichtung eine Führungsmechanik umfasst, die dazu eingerichtet ist, das Trägermedium zum Positionieren in der Kompaktstellung zusammenzurollen oder zusammenzufalten und zum Positionieren in der Betriebsstellung auseinanderzurollen oder auseinanderzufalten.

Somit kann die Verstaueinrichtung mechanische Komponenten zum Auf- und Abrollen beziehungsweise Falten und Entfalten des Trägermediums umfassen, welche als Führungsmechanik ausgebildet sind. Zusätzlich kann auch eine Ansteuereinrichtung zum Ansteuern einer Aktuatoreinrichtung der Führungsmechanik vorgesehen sein, um das Trägermedium, insbesondere den zumindest einen flexiblen Abschnitt des Trägermediums, mittels der Führungsmechanik zu verformen oder zu bewegen. Die Aktuatoreinrichtung kann bevorzugt auf zumindest einem Elektromotor basieren.

Beispielsweise kann die Führungsmechanik mechanische Gelenkarme umfassen, die beispielsweise hydraulisch oder pneumatisch oder elektrisch angesteuert werden können, um das Trägermedium in der gewünschten Stellung zu positionieren. Somit kann die Führungsmechanik beispielsweise als die zuvor beschriebene pneumatisch oder hydraulisch betriebene Verstellmechanik ausgebildet sein.

Alternativ kann die Führungsmechanik zum Beispiel Schienen und/oder Seilen umfassen, wobei das Trägermedium mithilfe des Seils entlang der Schienen auf- oder abgerollt werden kann. Die Führungsmechanik kann dann sozusagen als Auf- beziehungsweise Abrolleinrichtung ausgebildet sein, an der das Trägermedium befestigt oder angebracht ist. Über einen Motor und eine entsprechende Ansteuerung kann das Trägermedium und somit auch die Kameravorrichtung dann in der Betriebsstellung oder in der Kompaktstellung positioniert werden.

Eine weitere Ausführungsform sieht vor, dass das Trägermedium als Platte aus Polymer oder als Folie, insbesondere transparent, ausgebildet ist. Die Flexibilität kann somit durch ein Material des Trägermediums bereitgestellt werden. Beispielsweise kann das Trägermedium als Abdeckfolie für eine Verkleidung oder ein Objekt ausgebildet sein. Eine mittlere Materialstärke oder Dicke des Trägermediums kann beispielsweise zwischen 1 Millimeter und 10 Millimeter, bevorzugt zwischen 0,3 Millimeter und 0,8 Millimeter, insbesondere 0,5 Millimeter, betragen.

Unter Folie kann in der vorliegenden Beschreibung ein flächiges Gebilde verstanden werden, welches biegeschlaff ist. Das heißt, eine Folie kann nur in zwei Raumrichtungen, in denen sich das flächige Gebilde erstreckt, Zugkräfte aufnehmen, es kann aber keine Druckkräfte und keine Biegemomente aufnehmen. Somit ist eine solche Folie im Ruhezustand insbesondere form instabil. Eine mittlere Materialstärke einer solchen Folie ist dabei vorzugsweise deutlich kleiner als deren Länge und Breite. Insbesondere kann die mittlere Materialstärke, auch als Höhe oder Dicke bezeichnet, weniger als 5 Prozent der Länge und/oder weniger als 5 Prozent der Breite betragen.

Im Gegensatz dazu kann als Platte ein flächiges Gebilde verstanden werden, welches formstabil ist. Eine Platte kann zum Beispiel eine quaderförmige oder zylinderförmige Bauform aufweisen, deren mittlere Materialstärke oder Dicke beziehungsweise Höhe deutlich kleiner ist als deren Länge und/oder Breite beziehungsweise deren Durchmesser. Insbesondere kann die mittlere Materialstärke, weniger als 20 Prozent der Länge und/oder weniger als 20 Prozent der Breite betragen. Bevorzugt die mittlere Materialstärke jedoch weniger als 10 Prozent der Länge und/oder weniger als 10 Prozent der Breite, vorzugsweise weniger als 5 Prozent der Länge und/oder weniger als 5 Prozent der Breite, betragen. Als Synonym für die Länge beziehungsweise die Breite werden im Folgenden auch die Begriffe Längsseite oder Längskante beziehungsweise Breitseite oder Breitkante verwendet. Eine quaderförmige Platte weist üblicherweise zwei gegenüberliegende Flächen auf, die durch die jeweiligen Längs- und Breitseiten eingeschlossen sind. Diese Flächen werden im Folgenden auch als Oberflächen der Platte bezeichnet. Entsprechend werden die übrigen vier Flächen der Platte, die durch die Längs- und Hochseiten beziehungsweise die durch die Breit- und Hochseiten eingeschlossen sind, als Seitenflächen bezeichnet. Ist die Platte hingegen beispielsweise zylinderförmig ausgebildet, können die beiden Grundflächen der Platte als Oberflächen bezeichnet werden und die Mantelfläche kann als Seitenfläche bezeichnet werden.

Eine weitere Ausführungsform sieht vor, dass der Einkoppelbereich und der Auskoppelbereich als Ablenkstruktur zumindest ein optisches Gitter, insbesondere ein holografisches Oberflächengitter oder ein holografisches Volumengitter, aufweist. In diesem Zusammenhang wird die Kameravorrichtung hier als HoloCam bezeichnet.

Ein Optisches Gitter, auch Beugungsgitter genannt, sowie dessen Wirkungsweise und Herstellungsverfahren ist allgemein bekannt. Grundsätzlich kann ein optisches Gitter als zumindest abschnittsweise periodische Strukturen, sogenannte Gitterstrukturen, in einem Substrat ausgebildet sein. Mittels der Gitterstruktur kann ein optisches Gitter durch den physikalischen Effekt der Beugung eine Lichtlenkung, wie sie zum Beispiel von Spiegeln, Linsen oder Prismen bekannt ist, herbeiführen. Fällt Licht, das heißt fallen Lichtstrahlen auf das optische Gitter, wobei die einfallenden Lichtstrahlen insbesondere die Bragg-Gleichung erfüllen, werden die Lichtstrahlen durch das optische Gitter gebeugt oder abgelenkt. Die Lichtlenkung kann somit insbesondere durch Interferenzerscheinungen der durch das optische Gitter gebeugten Lichtstrahlen erfolgen. Die Ablenkstruktur des Einkoppelbereichs oder Auskoppelbereichs kann dementsprechend auch als Beugungsstruktur bezeichnet werden.

Vorzugsweise kann ein optisches Gitter gegenüber dem einfallenden Licht richtungsselektiv oder winkelselektiv ausgebildet sein. Somit kann nur Licht, insbesondere ein Anteil des Lichts, das aus einer vorbestimmten Einfallsrichtung, zum Beispiel in einem vorbestimmten Winkel, auf ein optisches Gitter fällt, abgelenkt werden. Licht, insbesondere ein Anteil des Lichts, das aus einer anderen Richtung auf das optische Gitter fällt, wird vorzugsweise nicht abgelenkt oder umso weniger, je größer der Unterschied zur vorbestimmten Einfallsrichtung ist. Der Lichtanteil, welcher von der vorbestimmten Einfallsrichtung oder Optimaleinfallsrichtung abweicht, kann folglich vorzugsweise ungehindert durch das Substrat mit dem optischen Gitter propagieren.

Zusätzlich oder alternativ kann ein optisches Gitter noch wellenlängenselektiv oder frequenzselektiv ausgebildet sein. Somit kann nur Licht, insbesondere ein erster Anteil des Lichts mit einer vorbestimmten Wellenlänge von dem optischen Gitter in einem bestimmten Beugungswinkel abgelenkt oder gebeugt werden. Licht, insbesondere ein zweiter Anteil des Lichts mit einer anderen als der vorbestimmten Wellenlänge wird vorzugsweise nicht abgelenkt, oder umso weniger je größer der Unterschied zur vorbestimmten Wellenlänge ist. Der zweite Lichtanteil, welcher von der vorbestimmten Wellenlänge oder Optimalwellenlänge abweicht, kann folglich vorzugsweise ungehindert durch das Substrat mit dem optischen Gitter propagieren. Dadurch kann beispielsweise von polychromatischem Licht, welches auf das optische Gitter trifft, wenigstens ein monochromatischer Lichtanteil abgespaltet werden. In vorteilhafter Weise ist der Ablenkeffekt für die Optimalwellenlänge maximal und fällt zu längeren und kürzeren Wellenlängen hin, beispielsweise gemäß einer Gaußglocke, ab oder wird schwächer. Insbesondere wirkt der Ablenkeffekt nur auf einen Bruchteil des sichtbaren Lichtspektrums und/oder in einem Winkelbereich kleiner als 90 Grad.

Eine Herstellung eines optischen Gitters kann insbesondere mittels Belichtung eines Substrats, also beispielsweise fotolithografisch oder holografisch, erfolgen. In diesem Zusammenhang kann das optische Gitter dann auch als holografisches oder holografisch-optisches Gitter bezeichnet werden. Es sind zwei Arten von holografisch-optischen Gittern bekannt: holografische Oberflächengitter (surface holografic gratings, kurz: SHG) und holografische Volumengitter (volume holografic gratings, kurz: VHG). Bei einem holografischen Oberflächengitter kann die Gitterstruktur durch optisches Verformen einer Oberflächenstruktur des Substrats erzeugt werden. Durch die veränderte Oberflächenstruktur kann auftreffendes Licht abgelenkt, zum Beispiel reflektiert werden. Beispiele für holografische Oberflächengitter sind sogenannte Sägezahn- oder Blazegitter. Im Gegensatz dazu kann die Gitterstruktur bei holografischen Volumengittern in das ganze Volumen oder einen Teilbereich des Volumens des Substrats eingearbeitet sein. Holografische Oberflächengitter und holografische Volumengitter sind in der Regel frequenzselektiv. Es sind jedoch auch optische Gitter bekannt die polychromatisches Licht beugen können. Diese werden als holografische Mehrfachvolumengitter (multiplexed volume holografic gratings, kurz: MVHG) bezeichnet und können beispielsweise durch Verändern der Periodizität der Gitterstruktur eines optischen Gitters oder durch Anordnen mehrerer holografisches Volumengitter hintereinander hergestellt werden.

Als Material für das besagte Substrat zum Einarbeiten eines optischen Gitters eignet sich besonders ein Polymer, insbesondere ein Fotopolymer, oder eine Folie, insbesondere eine fotosensitive Folie, zum Beispiel aus Kunststoff oder organischen Stoffen. Zur Verwendung derartiger Substrate für die flexible Kameravorrichtung, sollte zusätzlich beachtet werden, dass das Material, insbesondere in Substratform, flexible und lichtwellenleitende Eigenschaften aufweist. Substrate die eine Ablenkstruktur zum Beugen von Licht, beispielsweise in Form eines optischen Gitters aufweisen, können auch als holografisch-optische Elemente (HOE) bezeichnet werden.

Eine weitere Ausführungsform sieht vor, dass der Einkoppelbereich und der Auskoppelbereich einstückig mit dem Trägermedium ausgebildet sind. Der Einkoppelbereich und der Auskoppelbereich können somit beispielsweise direkt in eine Oberflächenstruktur des Trägermediums eingearbeitet sein. Das heißt, die Ablenkstruktur kann beispielsweise in die Oberfläche des Trägermediums geätzt oder gelasert sein. Somit kann das Trägermedium selbst als HOE ausgebildet sein.

Eine weitere Ausführungsform sieht vor, dass das Trägermedium als separates Element zu dem Einkoppelbereich und dem Auskoppelbereich ausgebildet ist. Das heißt, Einkoppelbereich, Auskoppelbereich und Trägermedium können separat ausgebildet sein. Zum Beispiel können der Einkoppelbereich und der Auskoppelbereich wenigstens ein erstes Element bilden und das Trägermedium kann ein zweites Element bilden, welches an dem ersten Element anliegt. Somit können der Einkoppelbereich und der Auskoppelbereich in wenigstens einem HOE ausgebildet sein. Beispielsweise können der Einkoppelbereich und der Auskoppelbereich in unterschiedlichen Abschnitten einer holografischen Folie oder Platte ausgebildet sein. Zum Befestigen der Folie oder Platte an dem Trägermedium kann die Folie oder Platte an das Trägermedium angeklebt sein. Alternativ kann die holografische Folie auch als Adhäsionsfolie ausgebildet sein und direkt, also ohne Klebstoff, durch molekulare Kräfte an der Oberfläche des Trägermediums haften.

Eine weitere Ausführungsform sieht vor, dass eine Fläche des Einkoppelbereichs größer ausgebildet ist als eine Fläche des Auskoppelbereichs. Bevorzugt kann der Einkoppelbereich um einen Faktor 2 größer sein als der Auskoppelbereich.

Zum Ablenken des Lichts aus der Umgebung kann der Einkoppelbereich hierbei als erste Ablenkstruktur eine Bündelungsstruktur aufweisen, mittels der das aus der Umgebung auftreffende Licht gebündelt über das Trägermedium zu dem Auskoppelbereich umgelenkt wird. Das optische Gitter kann entsprechend als Bündelungsgitter ausgebildet sein. Weiterhin kann der Auskoppelbereich als zweite Ablenkstruktur eine Zerstreuungsstruktur aufweisen, mittels welcher das gebündelte Licht, insbesondere ein Strahlengang des Lichts, bei Ablenken an der Zerstreuungsstruktur, aus dem Trägermedium heraus parallelisiert wird, um von der Bilderfassungseinrichtung erfasst zu werden. Das optische Gitter kann entsprechend als Zerstreuungsgitter ausgebildet sein.

Somit ergibt sich eine Lichtbündelung des Lichts aus der Umgebung, sodass eine Lichtintensität an dem Auskoppelbereich beziehungsweise einem Lichteinfallsbereich der Bilderfassungseinrichtung erhöht werden kann.

Zum Realisieren eines Bündelungsgitters oder eines Zerstreuungsgitters kann beispielsweise eine inhomogene Gitterstruktur, insbesondere eine abschnittsweise aperiodische Gitterstruktur in das beschriebene Substrat eingearbeitet sein. Alternativ können auch mehrere Volumengitter mit gleichen oder unterschiedlichen Gitterstrukturen nebeneinander oder hintereinander angeordnet oder geschaltet sein.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung einer vorteilhaften Ausgestaltung einer flexiblen Kameravorrichtung in einer Betriebsstellung;
- Fig. 2: eine schematische Darstellung der flexiblen Kameravorrichtung mit einer Verstaueinrichtung, die dazu ausgebildet ist, das Trägermedium in einer Betriebsstellung oder einer Kompaktstellung zu positionieren;
- Fig. 3: eine schematische Darstellung der flexiblen Kameravorrichtung zur Anwendung für eine Bilderfassung mit einem Satelliten; und
- Fig. 4: eine schematische Darstellung der flexiblen Kameravorrichtung, bei welcher beispielhaft ein Entrollvorgang zum Wechseln von der Kompaktstellung in die Betriebsstellung dargestellt ist.

Die Erfindung wird durch die unabhängigen Ansprüche definiert.

Die abhängigen Ansprüche definieren vorteilhafte Ausführungsformen.

In den Figuren bezeichnen gleiche Bezugszeichen jeweils funktionsgleiche Elemente.

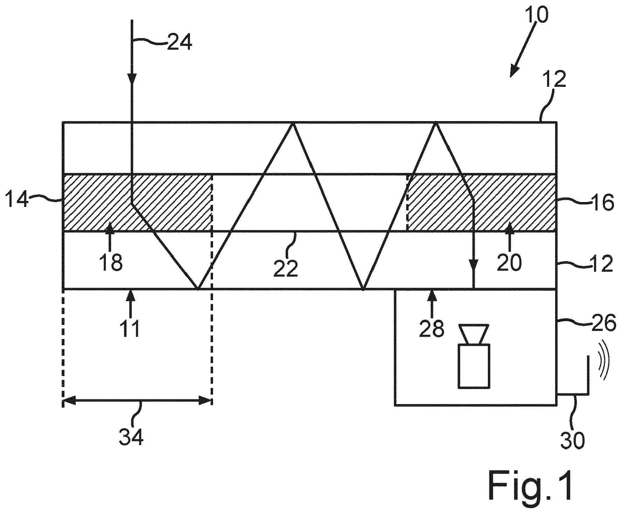

Die Fig. 1 zeigt eine beispielhafte Ausführungsform einer Kameravorrichtung 10 zum Erzeugen eines Abbilds einer Umgebung der Kameravorrichtung 10.

Fig. 1 zeigt ein Schnittbild der Kameravorrichtung 10, bei dem die Kameravorrichtung 10 mit einem Schnitt entlang einer Längserstreckungsachse dargestellt ist.

Die Kameravorrichtung 10 in Fig. 1 umfasst als ein Trägermedium 12 beispielsweise zwei Polymerplatten zum Beispiel aus flexiblem Polymethylmethacrylat (PMMA), die als Lichtleiter ausgebildet sind. Weiterhin umfasst die Kameravorrichtung 10 auch ein holografisch-optisches Element 22, im Folgenden HOE abgekürzt, welches beispielsweise als transparente Fotopolymerfolie ausgebildet sein kann. Aufgrund der Nutzung eines HOE kann die Kameravorrichtung 10 auch als HoloCam bezeichnet werden. HOEs nutzen dabei den physikalischen Effekt der Beugung, um verschiedene Varianten der Lichtlenkung herbeizuführen. Trägermedium 12 und HOE 22 sind in Fig. 1 als separate Elemente ausgebildet dargestellt, die zum Bilden der Kameravorrichtung 10 in einer Sandwichbauweise aufgebaut sind. Die beiden Polymerplatten des Trägermediums 12 bilden Deckschichten und das HOE 22 bildet den Kern der Kameravorrichtung 10. Das Trägermedium 12 in Sandwichbauweise ist aber nur eine beispielhafte Ausführungsform.

An dem Trägermedium 12 sind in Fig. 1 ein Einkoppelbereich 14 und ein Auskoppelbereich 16 angeordnet. Einkoppelbereich 14 und Auskoppelbereich 16 sind dabei in unterschiedlichen Abschnitten insbesondere entlang einer Längserstreckungsrichtung des HOE 22 ausgebildet. Der Einkoppelbereich weist eine erste Ablenkstruktur 18 auf, die dazu ausgebildet ist, Licht 24, das aus der Umgebung auf die erste Ablenkstruktur 18 fällt, in das Trägermedium 12 einzukoppeln und dabei mittels Beugung an einer Beugungs-Gitterstruktur umzulenken. Das eingekoppelte Licht 24 wird dann mittels interner Reflexion, insbesondere Totalreflexion, an den zur Umgebung ausgerichteten Grenzflächen des Trägermediums reflektiert und somit von dem Einkoppelbereich 14 an den Auskoppelbereich 16 übertragen. Vorzugsweise weisen die Polymerplatten und das HOE denselben Brechungsindex auf, sodass eine Lichtbrechung an den Grenzflächen zwischen HOE und Polymerplatten vermieden wird. Analog zu dem Einkoppelbereich 14, weist auch der Auskoppelbereich 16 eine Ablenkstruktur, nämlich die zweite Ablenkstruktur 20 auf, die dazu ausgebildet ist, das übertragene Licht 24, das auf die zweite Ablenkstruktur 20 fällt, aus dem Trägermedium 12 auszukoppeln.

An dem Auskoppelbereich 16 ist eine Bilderfassungseinrichtung 26 angeordnet. Die Bilderfassungseinrichtung 26 weist einen Lichteinfallbereich 28 auf, der insbesondere vollständig oder zumindest bereichsweise mit dem Auskoppelbereich, insbesondere einer Fläche des Auskoppelbereichs, überlappt. Die Bilderfassungseinrichtung 26 ist dazu ausgebildet, das an der zweiten Ablenkstruktur 20 abgelenkte und somit aus dem Trägermedium 12 ausgekoppelte Licht zu erfassen und in Form von Bilddaten, die mit dem einfallenden Licht 24 der Umgebung korreliert sind, bereitzustellen. Dazu kann die Bilderfassungseinrichtung 26 beispielsweise eine Kommunikationseinrichtung 30 aufweisen, über die die Bilddaten beispielsweise an eine Anzeigeeinrichtung drahtlos oder drahtgebunden übertragen werden können. Alternativ kann die Bilderfassungseinrichtung 26 selbst auch eine Anzeigeeinrichtung umfassen, sodass ein Nutzer das erzeugte Abbild der Umgebung direkt über die Kameravorrichtung 10, insbesondere die Anzeigeeinrichtung der Bilderfassungseinrichtung 26, betrachten kann.

In Fig. 1 ist das Trägermedium 12 als separates Element zu dem Einkoppelbereich 14 und dem Auskoppelbereich 16, insbesondere also zu dem HOE 22, welches den Einkoppelbereich 14 und den Auskoppelbereich 16 umfasst, ausgebildet. In einer alternativen Ausführungsform der Kameravorrichtung 10 können der Einkoppelbereich 14 und der Auskoppelbereich 16 auch einstückig mit dem Trägermedium 12 ausgebildet sein. In diesem Fall können der Einkoppelbereich 14 und der Auskoppelbereich 16 beispielsweise in Form eines Blazegitters in das Trägermedium, insbesondere in eine Oberfläche des Trägermediums, eingearbeitet werden. Es ist auch möglich, den Einkoppelbereich 14 und den Auskoppelbereich 16 außen auf dem Trägermedium 12 anzubringen, zum Beispiel durch Aufkleben eines jeweiligen HOEs.

In Fig. 1 können die erste und zweite Ablenkstruktur 18 und 20 insbesondere als optische Gitter, wie beispielsweise ein holografisches Oberflächengitter oder ein holografisches Volumengitter, ausgebildet sein. Die Lichtlenkung an derartigen optischen Gittern erfolgt dabei insbesondere anhand von Interferenzerscheinungen. Licht 24, welches auf das Gitter trifft, wird durch eine Gitterstruktur des Gitters gebeugt und bildet ein Interferenzmuster. Optische Gitter können insbesondere frequenz- beziehungsweise wellenlängenselektiv ausgebildet sein. Licht unterschiedlicher Wellenlänge kann nämlich optischen Gittern unterschiedlich stark abgelenkt werden. Insbesondere bei holografischen Volumengittern kann diese Eigenschaft genutzt werden, damit nur Licht einer bestimmten Wellenlänge beziehungsweise eines bestimmten Wellenlängenbereichs an der Gitterstruktur gebeugt beziehungsweise abgelenkt wird.

Wird für die Kameravorrichtung 10, wie sie in Fig. 1 gezeigt ist, ein derartiges Volumengitter verwendet, würde nur Licht einer Wellenlänge, oder eines Wellenlängenbereichs, welcher vorzugsweise einen Bereich oder Teilbereich des sichtbaren Lichts ausmacht, an der ersten Ablenkstruktur 18 derart abgelenkt werden, dass es von dem Trägermedium 12 mittels Totalreflexion an den Auskoppelbereich 16 weitergeleitet werden kann. Licht, welches außerhalb dieses Bereichs des Lichtspektrums liegt, würde ohne Ablenkung, oder zumindest nahezu ohne an der ersten Ablenkstruktur 18 abgelenkt zu werden, durch den Einkoppelbereich 14 der Kameravorrichtung 10 transmittieren. Die Kameravorrichtung 10 wäre somit zumindest für einen Teilbereich des sichtbaren Lichts transparent.

Um Auswirkungen von Streulicht aus der Umgebung auf das mittels der Kameravorrichtung 10 erzeugte Abbild der Umgebung zu vermeiden, kann besonders bevorzugt vorgesehen sein, dass das Trägermedium 12 nur im Bereich einer Lichteinkoppelfläche und einer Lichauskoppelfläche lichtdurchlässig ausgebildet ist. Die Lichteinkoppelfläche beschreibt dabei eine Fläche über die das Licht aus der Umgebung in das Trägermedium 12 eingekoppelt wird. Entsprechend beschreibt die Lichauskoppelfläche eine Fläche über die das Licht aus dem Trägermedium 12 ausgekoppelt wird. Dazu kann das Trägermedium 12 beispielsweise bereichsweise lichtundurchlässig lackiert, oder mit Folie beklebt sein.

Weiterhin ist vorgesehen, dass das Trägermedium 12, im Bereich des Einkoppelbereichs 14 ganz oder teilweise flexibel ausgebildet ist. Das Trägermedium 12 beziehungsweise die Kameravorrichtung 10 kann somit zumindest einen flexiblen Abschnitt 34 aufweisen. Um die Flexibilität der Kameravorrichtung 10 zu gewährleisten, kann auch der Einkoppelbereich 14, insbesondere das HOE 22 flexibel ausgebildet sein. Trägermedium 12 und/oder HOE können dementsprechend aus einem Material gebildet sein, welches flexibel verformbar, zum Beispiel elastisch, ist. Dadurch kann die Kameravorrichtung 10 beispielsweise zum Transportieren eingerollt und/oder gefaltet werden, sodass die Kameravorrichtung 10 besonders leicht gelagert oder verstaut werden könnte. Aufgrund ihrer flexiblen Ausführung wäre sie auch resistenter gegenüber Schlägen, Druck- oder Zugbelastung.

Der eingerollte beziehungsweise gefaltete Zustand der Kameravorrichtung 10 wird hier auch als Kompaktstellung 13 bezeichnet, die für einen Transport vorgesehen sein kann. Im Gegensatz dazu wird der entrollte beziehungsweise entfaltete Zustand der Kameravorrichtung 10, wie er in Fig. 1 dargestellt ist, hier als Betriebsstellung 11 bezeichnet werden, in welcher der Betrieb zum Erfassen der Umgebung vorgesehen ist. In der Betriebsstellung 11 können die Kameravorrichtung 10, insbesondere also das Trägermedium 12 und das HOE 22, planar angeordnet sein

Die Betriebsstellung 11 kann sich insbesondere dadurch auszeichnen, dass das Trägermedium 12 in der Betriebsstellung eine größere Lichteinfallfläche für das Licht 24, das aus der Umgebung auf den Einkoppelbereich 14 fällt, aufweist als in der Kompaktstellung 13. Insbesondere kann vorgesehen sein, dass nur in der Betriebsstellung 11 Licht von dem Einkoppelbereich 14 an den Lichteinfallbereich 28 der Bilderfassungseinrichtung 26 übertragen wird, sodass die mit dem Licht 24 korrelierten Bilddaten ein korrektes Abbild der Umgebung darstellen können. In einer anderen Stellung als der Betriebsstellung 11 könnte das Bild somit beispielsweise unscharf oder verzerrt abgebildet werden.

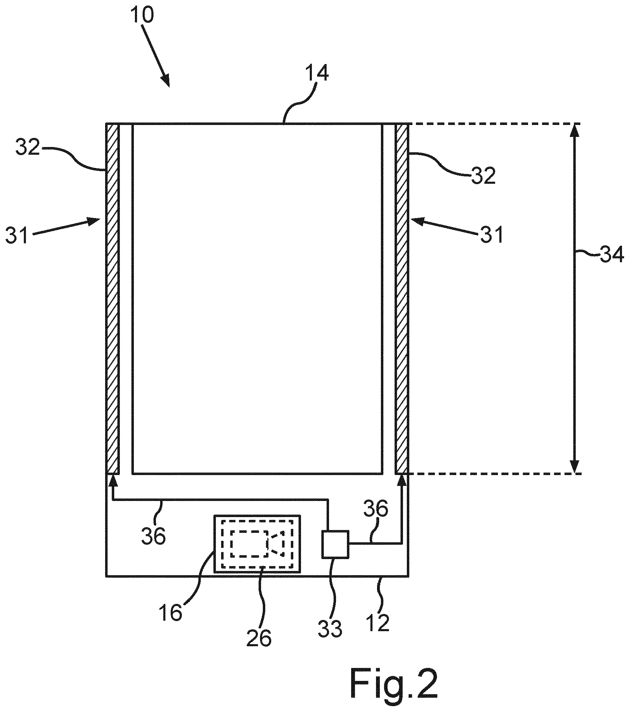

Fig. 2 zeigt eine Draufsicht auf die Kameravorrichtung 10, wie sie in Fig. 1 beschrieben ist. In Fig. 2 ist jedoch der Einkoppelbereich 14, insbesondere eine Fläche des Einkoppelbereichs 14, größer als der Auskoppelbereich 16, insbesondere eine Fläche des Auskoppelbereichs 16. Das Größenverhältnis kann größer als der Faktor 2 sein. Dabei kann die erste Ablenkstruktur 18 des Einkoppelbereichs 14, als Bündelungsstruktur oder Bündelungsgitter ausgebildet sein, sodass das auftreffende Licht 24 nicht nur gebeugt, sondern auch gebündelt wird. Die zweite Ablenkstruktur 20 kann entsprechend als Zerstreuungsstruktur ausgebildet sein, um das Licht 24 zum Übertragen an den Lichteinfallbereich 28 der Bilderfassungseinrichtung 26 wieder zu zerstreuen, insbesondre zu parallelisieren. Dadurch kann eine Lichtintensität des Lichts, welches über den Auskoppelbereich 16 ausgekoppelt beziehungsweise von dem Lichteinfallsbereich der Bilderfassungseinrichtung 26 erfasst wird, erhöht werden. Im Vergleich zu Fig.1 ist durch den vergrößerten Einkoppelbereich auch der flexible Abschnitt 34 des Trägermediums 12 vergrößert.

Weiterhin umfasst die Kameravorrichtung 10 in Fig. 2 auch eine Verstaueinrichtung 31, die hier beispielhaft als Stützstruktur 32 ausgebildet ist. Die Stützstruktur 32 kann, wie in Fig. 2 bespielhaft gezeigt, als zwei Längsstreben ausgebildet sein, die entlang einer Längserstreckungsrichtung des Trägermediums 12 an zwei gegenüberliegenden Längskanten des Trägermediums 12 angebracht sind. Besonders bevorzugt ist die Stützstruktur 32 in Fig. 2 nur im Bereich des Einkoppelbereichs 14 entlang der Längskanten des Trägermediums 12 angebracht. Dieser Bereich stellt somit den flexiblen Abschnitt 34 der Kameravorrichtung 10 dar.

Die Stützstruktur 32 kann dabei ein Material aufweisen, das ausgebildet ist, den flexiblen Abschnitt 34 des Trägermediums 12 in Abhängigkeit von einer Temperatur und/oder einem elektrischen Feld und/oder einem magnetischen Feld in der Betriebsstellung 11 oder in der Kompaktstellung 13 zu arretieren beziehungsweise zu halten. Dazu kann die Stützstruktur 32 beispielsweise als Formgedächtnislegierung oder Formgedächtnispolymer mit einem Zwei-Weg-Memoryeffekt (Zwei-Weg-Erinnerungseffekt) ausgebildet sein. Durch den Zwei-Weg-Memoryeffekt können sich Formgedächtnislegierungen beziehungsweise das Formgedächtnispolymere an zwei Formen, beispielsweise eine bei einer höheren und eine bei einer niedrigeren Temperatur, erinnern. Alternativ kann die Verformung des Formgedächtnismaterials auch durch eine Änderung eines Magnetfelds hervorgerufen werden. Als Formgedächtnislegierungen können beispielsweise Nickeltitan, Nitinol, Nickeltitankupfer oder Kupferzinkaluminium verwendet werden. Im Gegensatz dazu kann die Stützstruktur auch als Bimetall oder piezoelektrisches Material, welches seine Form in Abhängigkeit von einer Feldstärke eines angelegten eines elektrischen Feldes ändern kann, ausgebildet sein.

Um die Verformung mithilfe der Stützstruktur 32 zu realisieren, umfasst die Verstaueinrichtung 31 in Fig. 2 auch eine Ansteuereinrichtung 33 für die Stützstruktur 32. Mit der Ansteuereinrichtung 33 kann ein Ansteuersignal 36 für die Stützstruktur 32 bereitgestellt werden, wobei die Stützstruktur 32 in Abhängigkeit von dem Steuersignals 36 ihre Form verändert. Dadurch, dass die Stützstruktur 32 an dem Trägermedium 12 angebracht ist, kann somit auch die Form des Trägermediums 12 angepasst werden. Zum Beispiel kann als Steuersignal 36 von der Ansteuereinrichtung 33 ein elektrischer Strom an die Stützstruktur 32 bereitgestellt werden. Durch den elektrischen Strom kann die Stützstruktur 32 erhitzt werden. Zum Beispiel kann die Stützstruktur 32 auf einen ersten Temperaturwert oder bis in einen ersten Temperaturbereich erhitzt werden, in der die Stützstruktur eine planare Form annimmt und somit das Trägermedium 12 in der Betriebsstellung 11 positioniert und gehalten werden kann. In der Betriebsstellung 11 ist die Kameravorrichtung 10 mit dem Trägermedium 12 dann insbesondere planar und flächig ausgebildet, um eine maximale Lichteinfallsfläche für den Einkoppelbereich 14 bieten zu können. Wird der elektrische Strom hingegen abgeschaltet, kann die Temperatur der Stützstruktur 32 langsam sinken, bis sie in einen zweiten Temperaturbereich gefallen ist beziehungsweise einen zweiten Wert der Temperatur erreicht hat. In diesem zweiten Temperaturbereich beziehungsweise bei Erreichen des zweiten Werts der Temperatur kann die Stützstruktur 32 sich einrollen oder zusammenfalten, sodass dann der flexible Abschnitt 34 des Trägerelements 12 in der Kompaktstellung 13 positioniert und gehalten wird. Die Stützstruktur 32 kann somit in ihrer ersten Form den flexiblen Abschnitt 34 des Trägermediums 12 in der Betriebsstellung 11 flächig und planar anordnen und in ihrer zweiten Form kann der flexible Abschnitt 34 des Trägermediums eingerollt beziehungsweise gefaltet sein und somit in der Kompaktstellung 13 positioniert sein.

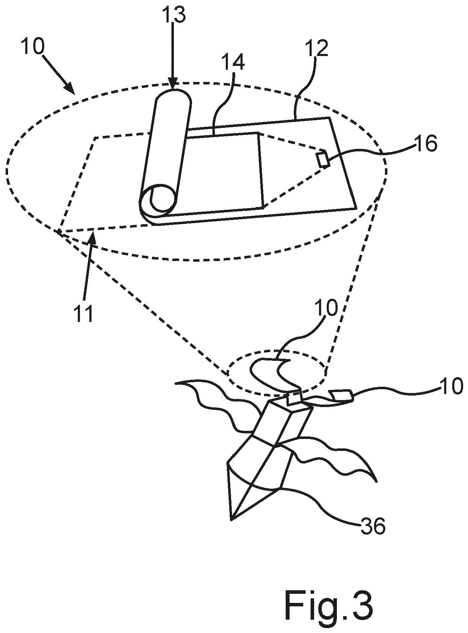

Fig. 3 zeigt eine Einsatzmöglichkeit der flexiblen Kameravorrichtung 10 für einen Satelliten 36. An den Satelliten 36 sind in Fig. 3 beispielsweise zwei Kameravorrichtungen 10 angeordnet, die bei Bedarf auseinandergefaltet oder auseinandergerollt werden können, um Bilder aus der Umgebung des Satelliten 36 zu erfassen. Die Kameravorrichtungen 10 können somit zum Aufnehmen von Bildern in der Betriebsstellung 11 und zum Transport in der Kompaktstellung 13 positioniert werden.

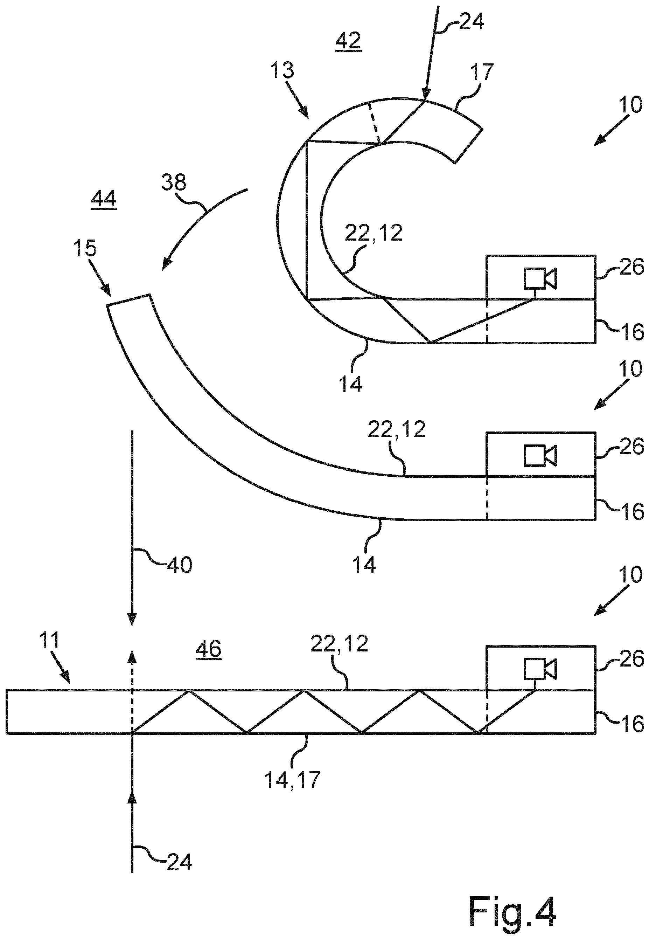

Abschließend zeigt Fig. 4 eine schematische Darstellung einer Seitansicht der flexiblen Kameravorrichtung 10, bei welcher beispielhaft ein Entrollvorgang zum Wechseln von der Kompaktstellung 13 in die Betriebsstellung 11 dargestellt ist. Dazu ist die flexible Kameravorrichtung in Fig. 4 drei Mal in unterschiedlichen Stellungen 13, 15, 11 abgebildet. In einer ersten Abbildung 42 befindet sich die Kameravorrichtung 10 in Fig. 4 in der Kompaktstellung 13. Dazu ist die Kameravorrichtung 10 und insbesondere das Trägermedium 12 mit dem HOE 22 teilweise eingerollt. Der Abschnitt des Trägermediums 12, welcher den Einkoppelbereich 14 umfasst, bildet in der gezeigten Seitansicht der ersten Abbildung 42 der Kameravorrichtung 10 in etwa einen Halbkreis. Somit ist eine Lichteinfallsfläche 17 für Licht aus der Umgebung kleiner als die Fläche des Einkoppelbereichs 14. Obwohl sich das Trägermedium in der Kompaktstellung 13 befindet, kann, wie in der Abbildung 42 gezeigt, dennoch Licht 24, das aus der Umgebung auf den Einkoppelbereich 14 fällt, an die Bilderfassungseinrichtung 26 zum Erzeugen des Abbilds der Umgebung übertragen werden. Dabei wird bevorzugt jedoch nur Licht 24, welches im Bereich der Lichteinfallsfläche 17 des Einkoppelbereichs 14 fällt, derart in das Trägermedium eingekoppelt, dass das Licht 24 mittels interner Reflexion in dem Trägermedium 12 an die Bilderfassungseinrichtung 26 übertragen wird. Licht, welches außerhalb der Lichteinkoppelfläche 17 auf den Einkoppelbereich 14 trifft, wird aufgrund der Krümmung oder des Biegeradius des Trägermediums 12 in der Kompaktstellung 13 hingegen nicht bis zur Bilderfassungseinrichtung 26 weitergeleitet. Stattdessen wird dieses Licht bevorzugt vor Erreichen des Auskoppelbereichs 16 aus dem Trägermedium 12 ausgekoppelt, da beispielsweise ein Grenzwinkel der Totalreflexion beim Auftreffen der Lichtstrahlen des Lichts unterschreitet.

Um die Lichteinfallsfläche 17 und somit auch einen Sichtbereich zu vergrößern, kann die Kameravorrichtung 10 von der Kompaktstellung 13 über einen ersten Entrollschritt 38 in eine Zwischenstellung 15 und über einen zweiten Entrollschritt 40 in die Betriebsstellung 11 versetzt werden. Die Zwischenstellung 15 der flexiblen Kameravorrichtung 10 ist in der zweiten Abbildung 44 in Fig.4 gezeigt. Die Betriebsstellung 11 ist in der dritten Abbildung 46 dargestellt. In der Betriebsstellung 11 ist die Kameravorrichtung 10 in beschriebener Weise planar oder flächig angeordnet, sodass im Gegensatz zur Kompaktstellung 13 ein vergrößerter Sichtbereich erfasst werden kann. Die Lichteinfallsfläche 17 entspricht in der Betriebsstellung 11 somit der Fläche des Einkoppelbereichs14. Die Weiterleitung des Lichts aus der Umgebung zu der Bilderfassungseinrichtung 26 kann folglich, wie beispielsweise zu Fig.1 und Fig.2 beschrieben, erfolgen.

Insgesamt zeigen die Beispiele, wie durch die Erfindung eine aufrollbare Holocam bereitgestellt werden kann.

## Patentansprüche

1. Kameravorrichtung (10) zum Erzeugen eines Abbilds einer Umgebung, umfassend
- ein Trägermedium (12), welches als Lichtleiter ausgebildet ist und an welchem ein Einkoppelbereich (14) und ein Auskoppelbereich (16) angeordnet sind, wobei
- der Einkoppelbereich (14) eine als zumindest ein optisches Gitter ausgebildete erste Ablenkstruktur (18) aufweist, die dazu ausgebildet ist, Licht (24), das aus der Umgebung auf die erste Ablenkstruktur (18) fällt, in das Trägermedium (12) einzukoppeln,
- das Trägermedium (12) ausgebildet ist, das eingekoppelte Licht (24) mittels interner Reflexion von dem Einkoppelbereich (14) an den Auskoppelbereich (16) zu übertragen, und
- der Auskoppelbereich (16) eine als zumindest ein optisches Gitter ausgebildete zweite Ablenkstruktur (20) aufweist, die dazu ausgebildet ist, das übertragene Licht (24), das auf die zweite Ablenkstruktur (20) fällt, aus dem Trägermedium (12) auszukoppeln, wobei
- an dem Auskoppelbereich (16) eine Bilderfassungseinrichtung (26) anliegt, die ausgebildet ist, das aus dem Trägermedium (12) ausgekoppelte Licht (24) zu erfassen und in Form von Bilddaten, die mit dem einfallenden Licht (24) der Umgebung korreliert sind, bereitzustellen, und
- das Trägermedium (12) im Bereich des Einkoppelbereich (14) zumindest bereichsweise flexibel ausgebildet ist, **dadurch gekennzeichnet, dass**
die Kameravorrichtung (10) eine Verstaueinrichtung (31) umfasst, an welcher das Trägermedium (12) angeordnet ist und die ausgebildet ist, zumindest einen flexiblen Abschnitt (34) des Trägermediums (12) zu verformen und hierdurch das Trägermedium (12) zwischen einer Kompaktstellung (13), in welcher das Trägermedium (12) zusammengefaltet oder zusammengerollt ist, und einer Betriebsstellung (11), in welcher das Trägermedium (12) auseinandergefaltet oder auseinandergerollt ist, zu wechseln, wobei
das Trägermedium (12) in der Betriebsstellung (11) eine größere Lichteinfallfläche für das Licht (24), das aus der Umgebung auf den Einkoppelbereich (14) fällt aufweist, als in der Kompaktstellung (13).

2. Kameravorrichtung (10) nach Anspruch 1,
**dadurch gekennzeichnet, dass**
die Verstaueinrichtung (31) eine Stützstruktur (32) umfasst, die ein Material aufweist, das ausgebildet ist, den flexiblen Abschnitt (34) des Trägermediums (12) bei einem ersten Wert einer Temperatur und/oder eines elektrischen Felds und/oder eines magnetischen Felds in der Betriebsstellung (11) und bei einem zweiten Wert in der Kompaktstellung (13) zu arretieren.

3. Kameravorrichtung (10) nach Anspruch 1 oder 2,
**dadurch gekennzeichnet, dass**
die Verstaueinrichtung (31) eine Führungsmechanik umfasst, die dazu eingerichtet ist, das Trägermedium (12) zum Positionieren in der Kompaktstellung (13) zusammenzurollen oder zusammenzufalten und zum Positionieren in der Betriebsstellung (11) zu auseinanderzurollen oder auseinanderzufalten.

4. Kameravorrichtung (10) nach einem der vorhergehenden Ansprüche, **dadurch gekennzeichnet, dass**
das Trägermedium (12), insbesondere transparent, als Platte aus Polymer oder als Folie ausgebildet ist.

5. Kameravorrichtung (10) nach einem der vorhergehenden Ansprüche, **dadurch gekennzeichnet, dass**
die als das zumindest ein optische Gitter der Ablenkstruktur (18, 20) des Einkoppelbereichs (14) und des Auskoppelbereichs (16) als ein holografisches Oberflächengitter oder ein holografisches Volumengitter ausgebildet ist.

6. Kameravorrichtung (10) nach einem der vorhergehenden Ansprüche, **dadurch gekennzeichnet, dass**
der Einkoppelbereich (14) und der Auskoppelbereich (16) einstückig mit dem Trägermedium (12) ausgebildet sind, oder das Trägermedium (12) als separates Element zu dem Einkoppelbereich (14) und dem Auskoppelbereich (16) ausgebildet ist.

7. Kameravorrichtung (10) nach einem der vorhergehenden Ansprüche, **dadurch gekennzeichnet, dass**
eine Fläche des Einkoppelbereichs (14) größer ausgebildet ist als eine Fläche des Auskoppelbereichs (16).

## Claims

1. A camera device (10) for generating an image of an environment, comprising
- a carrier medium (12), which is formed as a light guide and on which a coupling-in area (14) and a coupling-out area (16) are arranged, wherein
- the coupling-in area (14) comprises a first deflecting structure (18) formed as at least one optical grating, which is formed to couple light (24), which is incident on the first deflecting structure (18) from the environment, into the carrier medium (12),
- the carrier medium (12) is formed to transfer the coupled-in light (24) from the coupling-in area (14) to the coupling-out area (16) by means of internal reflection, and
- the coupling-out area (16) comprises a second deflecting structure (20) formed as at least one optical grating, which is formed to couple the transferred light (24), which is incident on the second deflecting structure (20), out of the carrier medium (12), wherein
- an image capturing device (26) is applied to the coupling-out area (16), which is formed to capture the light (24) coupled out of the carrier medium (12) and to provide it in the form of image data, which is correlated with the incident light (24) of the environment, and
- the carrier medium (12) is flexibly formed at least in certain areas in the area of the coupling-in area (14), **characterized in that**
the camera device (10) includes a stowing device (31), at which the carrier medium (12) is arranged and which is formed to deform at least one flexible section (34) of the carrier medium (12) and hereby to change the carrier medium (12) between a compact position (13), in which the carrier medium (12) is folded up or rolled up, and an operating position (11), in which the carrier medium (12) is unfolded or unrolled, wherein
in the operating position (11), the carrier medium (12) has a larger light incidence surface for the light (24), which is incident on the coupling-in area (14) from the environment, than in the compact position (13).

2. The camera device (10) according to claim 1,
**characterized in that**
the stowing device (31) includes a support structure (32), which comprises a material, which is formed to lock the flexible section (34) of the carrier medium (12) in the operating position (11) at a first value of a temperature and/or of an electric field and/or of a magnetic field and in the compact position (13) at a second value.

3. The camera device (10) according to claim 1 or 2,
**characterized in that**
the stowing device (31) includes guide mechanics, which is configured to roll up or fold up the carrier medium (12) for positioning in the compact position (13) and to unroll or unfold it for positioning in the operating position (11).

4. The camera device (10) according to any one of the preceding claims, **characterized in that**
the carrier medium (12) is, in particular transparently, formed as a plate of polymer or as a foil.

5. The camera device (10) according to any one of the preceding claims, **characterized in that**
the at least one optical grating of the deflecting structure (18, 20) of the coupling-in area (14) and of the coupling-out area (16) is formed as a holographic surface grating or as a holographic volume grating.

6. The camera device (10) according to any one of the preceding claims, **characterized in that**
the coupling-in area (14) and the coupling-out area (16) are formed integrally with the carrier medium (12), or the carrier medium (12) is formed as a separate element to the coupling-in area (14) and the coupling-out area (16).

7. The camera device (10) according to any one of the preceding claims, **characterized in that**
a surface of the coupling-in area (14) is formed larger than a surface of the coupling-out area (16).

## Revendications

1. Dispositif à caméra (10) destiné à générer une image d'un environnement, comprenant :
- un support (12) réalisé sous la forme d'un conduit de lumière et sur lequel sont agencées une zone de couplage (14) et une zone de découplage (16),
- la zone de couplage (14) comportant une première structure de déviation (18) réalisée sous la forme d'au moins un réseau optique, laquelle première structure de déviation étant configurée pour coupler dans le support (12) la lumière (24) de l'environnement qui est incidente sur la première structure de déviation (18),
- le support (12) étant configuré pour transmettre à la zone de découplage (16) la lumière couplée (24) par réflexion interne de la zone de couplage (14), et
- la zone de découplage (16) comportant une seconde structure de déviation (20) réalisée sous la forme d'au moins un réseau optique, laquelle seconde structure de déviation étant configurée pour découpler la lumière transmise (24) qui est incidente sur la seconde structure de déviation (22), depuis l'extérieur du support (12),
- un dispositif d'acquisition d'image (26) étant appliqué sur la zone de découplage (16), lequel dispositif d'acquisition d'image étant configuré pour détecter la lumière découplée (24) depuis l'extérieur du support (12) et pour fournir la lumière sous forme de données d'image qui sont corrélées avec la lumière incidente (24) provenant de l'environnement, et
- le support (12) étant réalisé de manière souple, au moins dans certaines zones, dans la région de la zone de couplage (14),
**caractérisé en ce que** le dispositif à caméra (10) comprend un dispositif de rangement (31) sur lequel le support (12) est agencé et qui est configuré pour déformer au moins une partie souple (34) du support (12) et pour ainsi faire passer le support (12) entre une position compacte (13) dans laquelle le support (12) est replié ou enroulé, et une position opérationnelle (11) dans laquelle le support (12) est déplié ou déroulé, dans la position opérationnelle (11), le support (12) a une surface d'incidence de lumière pour la lumière (24) provenant de l'environnement qui est incidente sur la zone de couplage (14), plus grande que dans la position compacte (13).

2. Dispositif à caméra (10) selon la revendication 1,
**caractérisé en ce que**
le dispositif de rangement (31) comprend une structure de support (32) comportant un matériau configuré pour bloquer la partie souple (34) du support (12) à une première valeur d'une température et/ou d'un champ électrique et/ou d'un champ magnétique dans la position opérationnelle (11), et à une seconde valeur dans la position compacte (13).

3. Dispositif à caméra (10) selon la revendication 1 ou 2,
**caractérisé en ce que**
le dispositif de rangement (31) comprend un mécanisme de guidage configuré pour enrouler ou replier le support (12) afin de le positionner dans la position compacte (13) et pour le dérouler ou le déplier afin de le positionner dans la position opérationnelle (11).

4. Dispositif à caméra (10) selon l'une des revendications précédentes, **caractérisé en ce que**
le support (12), en particulier transparent, est réalisé sous la forme d'une plaque en polymère ou d'un film.

5. Dispositif à caméra (10) selon l'une des revendications précédentes, **caractérisé en ce que**
le au moins un réseau optique de la structure de déviation (18, 20) de la zone de couplage (14) ou de la zone de découplage (16) est réalisé sous la forme d'un réseau holographique surfacique ou d'un réseau holographique volumique.

6. Dispositif à caméra (10) selon l'une des revendications précédentes, **caractérisé en ce que**
la zone de couplage (14) et la zone de découplage (16) sont formées d'un seul tenant avec le support (12), ou le support (12) est formé comme un élément séparé de la zone de couplage (14) et de la zone de découplage (16).

7. Dispositif à caméra (10) selon l'une des revendications précédentes, **caractérisé en ce que**
une surface de la zone de couplage (14) est réalisée plus grande qu'une surface de la zone de découplage (16).
